# DEMANDE DE BREVET EUROPEEN

(11) **EP 2 645 010 A1**
(43) Date de publication de la demande: **02.10.2013**
(21) Numéro de dépôt: 13290071.3
(22) Date de dépôt: 25.03.2013
(51) Int. Cl.: F24J 2/02, F24J 2/12, F24J 2/54

(54) **Appareil de cuisson utilisant de l'énergie solaire**

(30) Priorité: 29.03.2012 FR 1200938
(71) Demandeur: Terraz, Jean-Marc, 45260 Châtenoy (FR)
(72) Inventeur: Terraz, Jean-Marc, 45260 Châtenoy (FR)
(74) Mandataire: Eidelsberg, Olivier Nathan

(57) **Abrégé**

Appareil de cuisson utilisant l'énergie solaire et comportant un miroir parabolique caractérisé en ce que le miroir (1) présente une large encoche (3) s'étendant jusqu'au sommet du miroir qui est fixé à l'extrémité inférieure d'un bras (6) contre coudé, articulé par sa partie supérieure à l'extrémité d'un montant (4), disposé sensiblement verticalement, des moyens étant prévus pour permettre audit miroir de pivoter.

## Description

La présente invention est relative à un appareil de cuisson utilisant l'énergie solaire.

Ce type d'appareil est essentiellement constitué par un miroir parabolique qui concentre les rayons lumineux dans la région focale qui comporte un support de réception des aliments à cuire.

Ces appareils sont encore très imparfaits et présentent de nombreux inconvénients parmi lesquels on peut citer ceux ci-dessous.

Pour être efficace, le miroir parabolique doit avoir un diamètre de l'ordre de 1,2 à 1,6 mètres. De ce fait, l'accès au support de réception des aliments est très difficile.

Les appareils connus posent tous le problème du réglage de l'orientation du miroir par rapport aux rayons lumineux ou du positionnement du récipient contenant les aliments.

L'appareil de l'invention, qui remédie à ces inconvénients, est tel que défini à la revendication 1, des perfectionnements et autres modes de réalisations préférés étant définis aux sous revendications.

Le miroir parabolique est réalisé par l'assemblage de surfaces paraboliques élémentaires délimitées, chacune, par l'intersection de deux plans passant par l'axe du miroir théorique. Dans ce qui suit chaque élément sera dénommé "pétale".

Partant de la technique définie ci-dessus, l'encoche peut être réalisée en assemblant un nombre de pétales inférieur à celui nécessaire pour réaliser une parabole complète.

Selon un mode de réalisation, le miroir encoché est fixé à la partie inférieure d'un bras contre coudé dont la partie supérieure est articulée sur celle supérieure d'un montant en deux parties, dont celle supérieure peut pivoter sur celle inférieure qui constitue l'organe de maintien de l'ensemble. A cet effet, la partie inférieure peut être enfoncée dans le sol ou maintenue par un socle lesté à l'instar de ceux qui sont utilisés pour maintenir les parasols.

Les pétales sont assemblés par l'entremise de bras rendus solidaires de la partie inférieure du bras contre coudé.

L'invention sera mieux comprise par la description qui va suivre faite en se référant aux dessins annexés à titre d'exemple indicatif seulement sur lesquels
- la figure 1 est une vue en perspective de l'appareil de l'invention ;

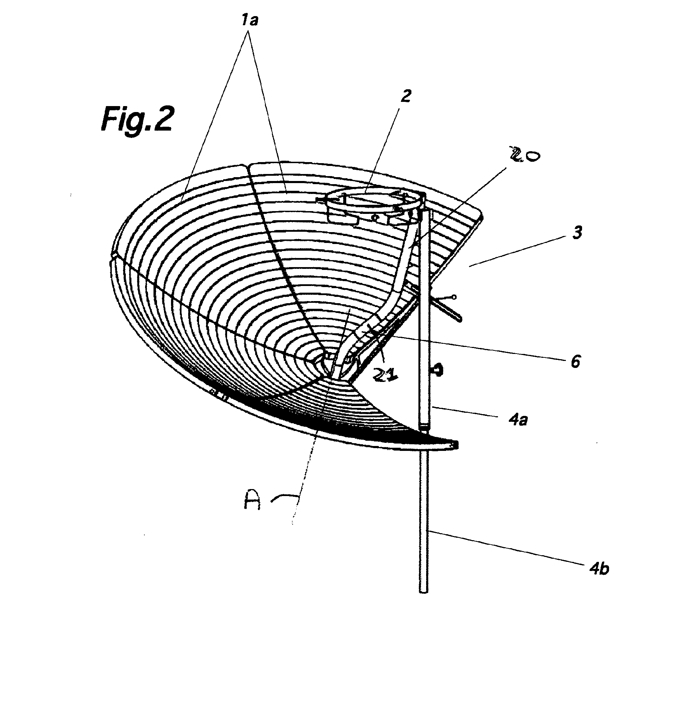

- la figure 2 est une vue, analogue à celle 1, montrant la possibilité d'orienter le miroir parabolique ;
- la figure 3 montre, en perspective, un élément parabolique ;
- la figure 4 montre en élévation un exemple de bras de support des pétales ;
- la figure 5 montre en élévation et à plus grande échelle la partie supérieure du montant en deux parties ;
- la figure 6 est la vue de dessus de la figure 5;

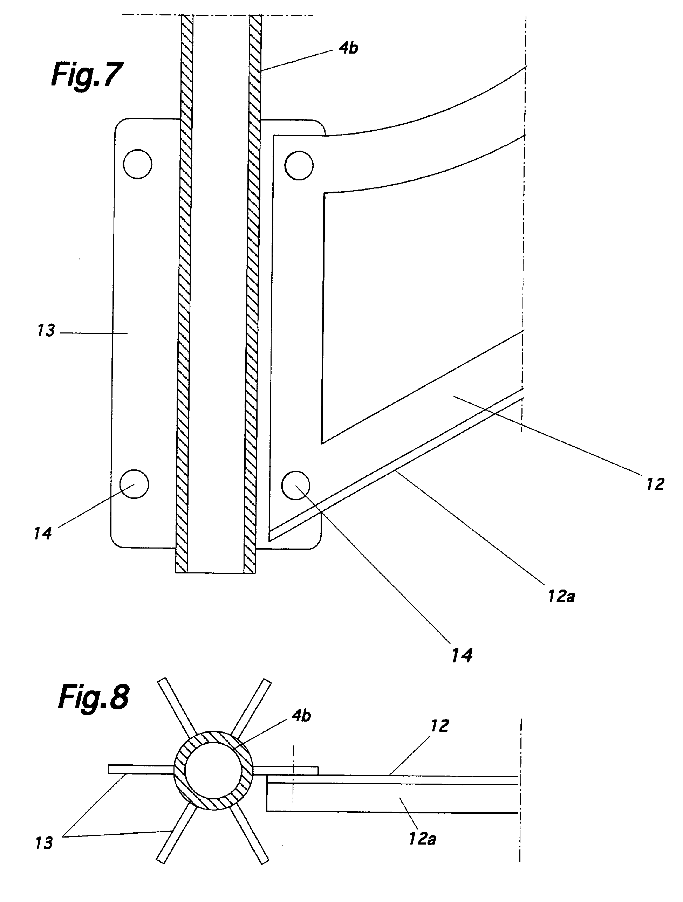

- la figure 7 montre la partie inférieure du bras contre coudé ;
- la figure 8 est la vue de dessus de la figure 7 ;
- les figures 9A et 9B représentent un autre mode de réalisation d'un appareil suivant l'invention, respectivement dans un état déployé et dans un état replié non déployé.

En se reportant aux dessins, on voit que l'appareil se compose d'un miroir parabolique 1 comportant dans sa région focale un support 2 de réception du récipient de cuisson.

Selon l'invention, le miroir 1 comporte une encoche 3 s'étendant jusqu'au sommet dudit miroir. De cette façon, l'utilisateur peut accéder facilement au support 2 pour cuisiner pendant la cuisson sensiblement aussi proche du récipient que lorsqu'il utilise sa cuisinière.

Le miroir est supporté par un montant 4, en deux parties 4a et 4b, la partie 4a formant un fourreau monté sur la partie 4b dont la partie inférieure est enfoncée dans le sol ou est maintenue par un socle lesté du genre de ceux utilisés pour maintenir les parasols. De cette façon, la partie 4a peut pivoter librement.

A l'extrémité supérieure de la partie 4a est prévue une chape 5 entre les ailes de laquelle est articulée la partie supérieure d'un bras contre coudé 6. Le miroir 1 est fixé à la partie inférieure du bras précité qui traverse ce dernier par un évidement 7 prévu à cet effet au niveau du sommet dudit miroir.

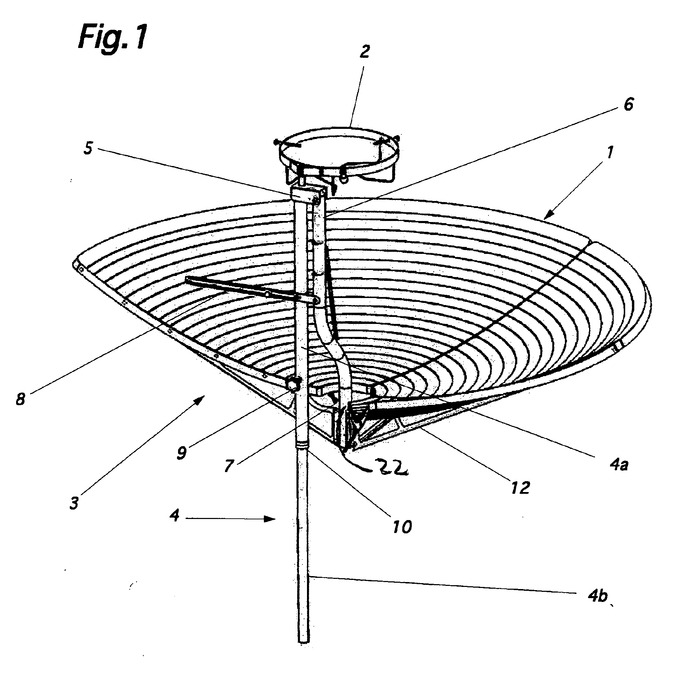

Comme montré sur la figure 1, lorsque la partie supérieure du bras 6 s'étend parallèlement à l'axe du montant 4, le sommet du miroir est situé en dehors de cet axe.

Il ressort de la description ci-dessus que le réglage du miroir, par rapport aux rayons du soleil, s'effectue de deux façons.

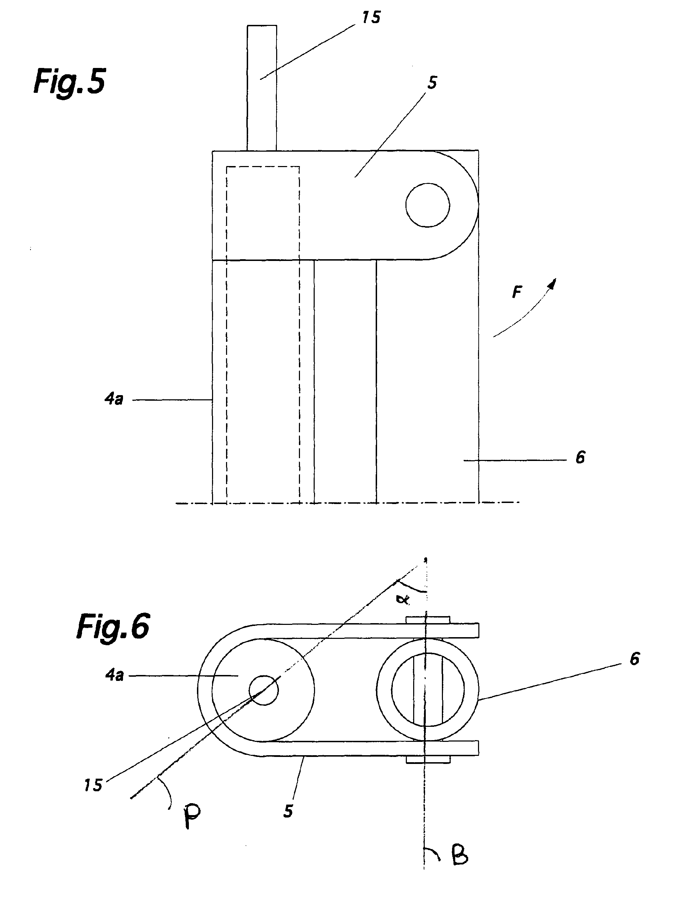

La première consiste à faire pivoter le fourreau 4a, et la seconde constitue à faire pivoter le bras 6 (selon la flèche F, voir figure 5).

Dans les deux cas, des moyens sont prévus pour immobiliser les organes mobiles après réglage. On peut utiliser un dispositif à compas 8 pour maintenir l'inclinaison du bras 6 et une vis de pression 9 pour immobiliser le fourreau 4a sur la partie 4b du montant 4.

La partie supérieure de la partie 4b est introduite partiellement dans la partie inférieure de la partie 4a. La partie 4b présente un épaulement 10 contre lequel prend appui l'extrémité inférieure de la partie 4a.

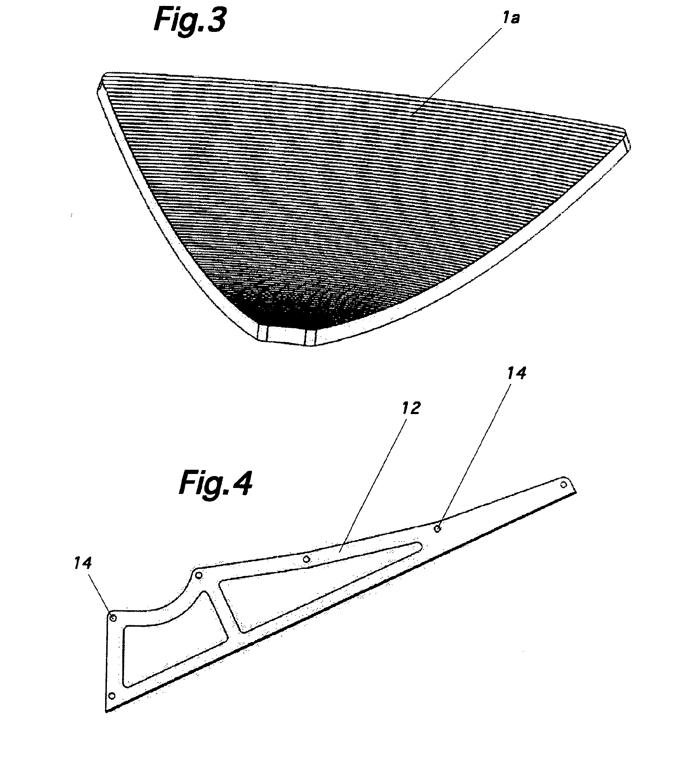

Le miroir parabolique 1 est réalisé par l'assemblage de surfaces paraboliques élémentaires 1a ou pétales (voir figure 3) délimitées, chacune, par l'intersection de deux plans passant par l'axe du miroir théorique.

Chaque pétale présente une bordure 11, permettant de la rigidifier et d'assurer l'assemblage des pétales entre eux.

Selon une caractéristique de l'invention, l'encoche 3 est obtenue en omettant un ou plusieurs pétales.

L'assemblage et le maintien des pétales sont obtenus par des bras 12 (voir figure 4).

Selon un mode de réalisation, la partie inférieure du bras 6 présente des pattes 13 de fixation des bras 12. Si l'angle formé par les plans générateurs des pétales est de 60°, les pattes seront au nombre de six et décalées angulairement de 60°.

A chaque bras sont associées deux pétales (sauf au droit de l'encoche), l'assemblage étant assuré par des vis et des écrous (non représentés) d'où la présence de trous 14, ces derniers ne sont pas représentés sur la bordure 11.

Chaque bras peut comporter une aile en équerre 12a sur son bord inférieur pour le rigidifier.

La partie 4a du montant comporte, selon son axe, un doigt 15 sur lequel peut coulisser axialement et être immobilisée une douille (non représentée) portée par le support 2. Cette disposition permet de régler la position du support par rapport au foyer du miroir.

Le bras 6 comporte, dans la position rabattue représentée à la figure 1, un tronçon 20 rectiligne supérieur (ici vertical) parallèle au montant 4, un premier coude supérieur, un tronçon 21 intermédiaire rectiligne incliné par rapport au tronçon supérieur, un deuxième coude et un tronçon 22 inférieur rectiligne s'étendant le long de l'axe focal (droite virtuelle passant par le sommet du miroir et par le foyer).

En particulier, et comme représenté aux figures, le bras 6 est contre coudé de sorte que le bras 6, au niveau où il passe par le sommet du miroir, se trouve, dans la position rabattue représentée à la figure 1 dans laquelle la partie supérieure du bras 6 est sensiblement parallèle au montant 4, comporte une partie inférieure qui s'étend le long de l'axe A focal du miroir (c'est à dire la droite virtuelle passant par le sommet du miroir et par le foyer).

On définit pour le miroir parabolique le plan P de référence passant d'une part par l'axe (vertical aux figures) du montant 4 et d'autre part par le foyer de la parabole.

Suivant l'invention, l'agencement est tel que le miroir peut pivoter par rapport à un axe B de rotation qui fait un angle α strictement inférieur (en valeur absolue) à 90° avec le plan de référence, ce qui correspond au mouvement représenté par la flèche F à la figure 5, figure 5 qui est dans le plan perpendiculaire à cet axe de rotation.

De préférence, l'angle α est inférieur à 60°, plus préférablement inférieur à 30°, encore plus préférablement inférieur à 25°. En particulier, il peut être sensiblement égale à 0. par exemple, l'angle α est égal à 21°.

L'utilisateur de l'appareil, qui se positionne pour cuisiner dans la zone de l'encoche en se tenant sensiblement perpendiculairement au plan de référence (et donc face au reste du miroir) se trouve en position latérale par rapport au soleil (le soleil étant dans l'axe focal A) et non face à lui. Pour suivre le soleil, l'utilisateur fait pivoter le miroir par rapport à l'axe B de rotation (c'est à dire suivant la flèche F). Ce pivotement de suivi du soleil (pour que ce dernier reste dans l'axe focal ou sensiblement dans l'axe focal A) ne diminue pas la surface utile (exposée au soleil) au fur à mesure du pivotement ni ne gène l'accès au support (disposé sensiblement au foyer) pour cuisiner. L'utilisation de l'appareil est donc particulièrement simple et efficace.

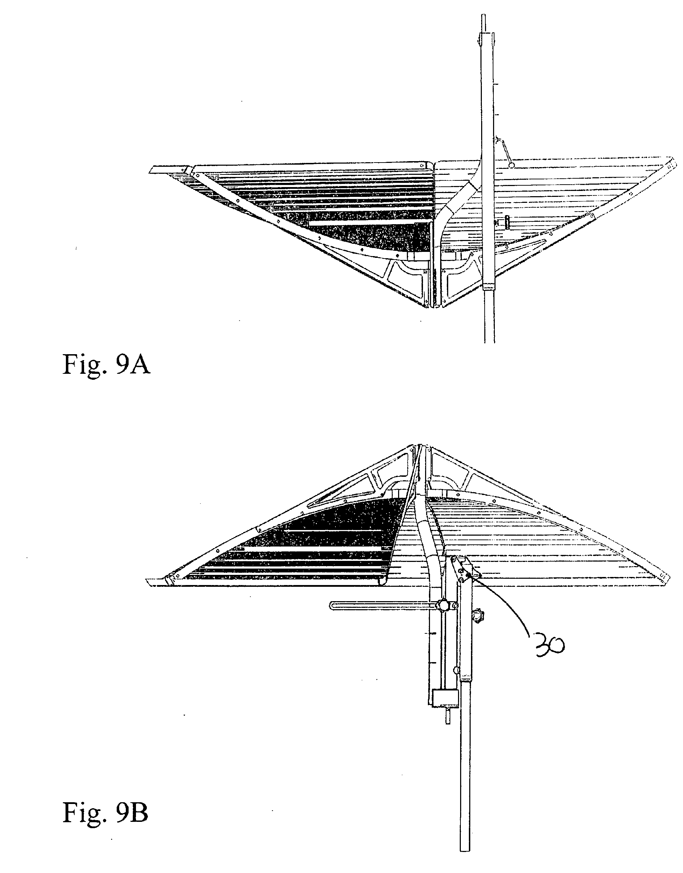

L'appareil représenté aux figures 9A et 9B est identique à celui représenté aux autres figures, à l'exception du fait que le montant 4 peut être replié sur lui même pour passer d'une position d'utilisation (figure 9A) à une position repliée (figure 9B) de non utilisation dans laquelle la concavité du miroir parabolique est tournée vers le bas. Pour permettre ce pliage/déploiement du montant 4, on peut prévoir une charnière 30. Cependant d'autres moyens analogues pour réaliser la même fonction peuvent être prévus.

## Revendications

1. Appareil de cuisson utilisant l'énergie solaire et comportant un miroir parabolique ayant un foyer, le miroir (1) présentant une encoche (3) et étant fixé à un bras (6) articulé à un montant (4), le montant (4) définissant avec le foyer un plan appelé plan (P) de référence, **caractérisé en ce que** l'agencement est tel que le miroir peut pivoter par rapport à un axe (B) faisant un angle (α) avec le plan (P) de référence qui est strictement inférieur à 90°.

2. Appareil selon la revendication 1, **caractérisé en ce que** l'angle (A) est inférieur à 30°.

3. Appareil selon la revendication 1, **caractérisé en ce que** l'angle (A) est sensiblement nul.

4. Appareil selon l'une des revendications 1 à 3, **caractérisé en ce que** le bras (6) est fixé au miroir sensiblement au niveau du sommet du miroir.

5. Appareil selon l'une des revendications 1 à 4, **caractérisé en ce que** le montant (4) est sensiblement vertical.

6. Appareil selon l'une des revendications 1 à 5, **caractérisé en ce que** le bras (6) est contre coudé de manière à avoir au moins un tronçon (22) s'étendant sensiblement le long de l'axe (A) focal du miroir.

7. Appareil selon la revendication 6, **caractérisé en ce que** le bras (6) contre coudé comporte également un tronçon sensiblement parallèle au montant (4).

8. Appareil selon l'une des revendications précédentes, **caractérisé en ce que** le miroir (1) est réalisé par l'assemblage de surfaces paraboliques élémentaires (1a) délimitées, chacune, par l'intersection de deux plans passant par l'axe du miroir théorique ou axe focal (A) du miroir.

9. Appareil selon l'une des revendications précédentes, **caractérisé en ce que** l'encoche (3) est réalisée en assemblant un nombre de surfaces élémentaires (1a) inférieur à celui nécessaire pour réaliser une parabole complète.

10. Appareil selon l'une des revendications 8 ou 9, **caractérisé en ce que** les surfaces élémentaires sont assemblées et portées par des bras (12) rendus solidaires de la partie inférieure du bras (6) qui traverse le miroir présentant à cet effet un évidement (7).

11. Appareil selon l'une des revendications 1 à 6, **caractérisé en ce que** le montant (4) présente, à sa partie supérieure et selon son axe, un doigt (15) sur lequel peut coulisser axialement et être immobilisée une douille rendue solidaire d'un support (2) de réception du récipient de cuisson.
